# EUROPEAN PATENT SPECIFICATION

(11) **EP 3 305 085 B1**
(45) Date of publication and mention of the grant of the patent: **04.12.2019**
(21) Application number: 16800000.8
(22) Date of filing: 24.05.2016
(51) Int. Cl.: A23D 9/00, A23G 1/30, A23D 9/04

(54) **CHOCOLATE**
SCHOKOLADE
CHOCOLAT

(30) Priority: 28.05.2015 JP 2015109001
(43) Date of publication of application: 11.04.2018
(73) Proprietor: The Nisshin OilliO Group, Ltd., Tokyo 104-8285 (JP)
(72) Inventor: OONISHI Kiyomi, Yokosuka-shi Kanagawa 239-0832 (JP); HACHIYA Iwao, Yokosuka-shi Kanagawa 239-0832 (JP); AIBARA Tomohiro, Yokosuka-shi Kanagawa 239-0832 (JP); MURAYAMA Noriko, Yokosuka-shi Kanagawa 239-0832 (JP); TSUKIYAMA Muneo, Yokosuka-shi Kanagawa 239-0832 (JP); UEHARA Hidetaka, Yokosuka-shi Kanagawa 239-0832 (JP)
(74) Representative: Dennemeyer & Associates S.A.
(86) International application number: PCT/JP2016/065269
(87) International publication number: WO 2016/190295

(56) References cited:
- EP-A2- 0 311 167
- EP-A2- 0 390 408
- WO-A1-2006/121182
- JP-A- H02 138 937
- JP-A- H05 311 190
- JP-A- 2015 070 837
- US-A- 4 888 196
- US-A- 5 275 835
- US-A- 5 288 512
- US-A- 5 589 216

## Description

### TECHNICAL FIELD

The present invention relates to chocolate for which tempering management is facilitated.

### BACKGROUND ART

Chocolate is confectionery using cacao beans as a main raw material and having excellent flavor and melting mouthfeel. Temper type chocolate known as common chocolate includes, as fats and oils, cocoa butter contained in cacao beans. The temper type chocolate is manufactured through a process of tempering melted chocolate mix obtained from chocolate raw materials and subsequently cooling and solidifying the mix. Tempering is a process of generating crystal nuclei of stable crystals in melted chocolate mix. Due to the tempering, the cooled and solidified chocolate can maintain the cocoa butter, which can have various potential crystal structures, in a state of stable crystal. Specifically, the tempering is known as, for example, a process of decreasing the temperature of chocolate mix melted at 40 to 50°C to about 27 to 28°C and subsequently heating the chocolate mix to about 29 to 31°C again.

When the amount of stable crystals generated by tempering is in proper amount, solidification rate upon cooling of chocolate mix will increase. Moreover, sufficient contraction occurs at the chocolate mix upon solidification. For this reason, the solidified chocolate is favorably detached and removed from a mold. Further, occurrence of fat bloom (indicating a phenomenon that crystals of fats and oils are generated as white spots on a chocolate surface, and hereinafter referred to as "bloom") is reduced. The obtained chocolate has not only excellent luster but also favorable bloom resistance in storage. Such a proper tempering state is called "proper temper."

On the other hand, when the amount of stable crystals generated by tempering is too little, bloom often occurs at cooled and solidified chocolate. Moreover, the bloom resistance of the obtained chocolate in storage decreases. Even when no bloom occurs in manufacturing, there is a probability that bloom occurs within a short period of time at chocolate in storage. Such a tempering state is called "under temper." Moreover, when the amount of stable crystals generated by tempering is too much, chocolate becomes grainy. Thus, there is a probability that the bloom resistance of the chocolate in storage decreases. Such a tempering state is called "over temper." In chocolate manufacturing, it is important to properly manage the tempering state for avoiding the under temper and the over temper.

Typically, the management of the tempering state relies on operator's experience. Currently, a method has been developed, in which a temper meter is used to manage the tempering state based on a numerical value (a temper index). The temper index is an index obtained by patterning the amount of heat generated by cooling of chocolate mix to continuously crystallize fats and oils of the chocolate mix. The temper index is utilized as an index indicating the tempering state. For example, a temper index of 1 to 3 indicates the under temper, and indicates a state with insufficient stable crystals. A temper index of 4 to 6 indicates the proper temper, and indicates a favorable tempering state. Moreover, a temper index of 7 to 9 indicates the over temper, and indicates a state with an increased viscosity due to an extremely-large amount of stable crystals.

A method has been known, in which special triacylglycerol is contained in fats and oils of chocolate so that the bloom resistance of the chocolate can be improved. For example, JP-A-2-138937 describes an anti-bloom agent having, as an active ingredient, mono U di S-type triglyceride (triacylglycerol) (SSU). Moreover, JP-A-5-311190 describes an anti-graining agent (A2B) for fats and oils, the anti-graining agent containing a triglyceride (triacylglycerol) having a saturated fatty acid (B) of 12 or less carbons as one of the constituent fatty acids, and the remaining two saturated fatty acids (A) of 16 or more carbons.

EP0311167 discloses a reduced calorie fats and oils, in particular triglycerides synthesized (tailored) with a combination of saturated medium chain fatty acids, saturated long chain fatty acids, and unsaturated long chain fatty acids. In addition to providing caloric reduction, these tailored triglycerides also have acceptable autoignition characteristics and are suitable for use in cooking shortenings and oils. It also discloses that the fat can be used in a wide variety of food products (e.g., snacks, desserts, prepared mixes, frozen entrees, chocolate products, frozen desserts, salad dressings, frying and baking shortenings, margarines, spreads, prewhipped toppings, frostings, cookies, cakes, and bread), as well as cooking shortenings and oils.

US5288512 discloses a reduced calorie fat comprising at least about 15% by weight triglycerides selected from the group consisting of MML, MLM, LLM, and LML triglycerides, and mixtures thereof; wherein M=fatty acids selected from the group consisting of C6 to C10 saturated fatty acids, and mixtures thereof, and L=fatty acids selected from the group consisting Of C17 to C26 saturated fatty acids, and mixtures thereof is disclosed. The fat also has the following fatty acid composition: (a) from about 15% to about 70% C6 to C10 saturated fatty acids; (b) from about 10% to about 70% C17 to C26 saturated fatty acids; (c) not more than about 10% fatty acids selected from the group consisting of C12:0 and C14:0, and mixtures thereof; (d) not more than about 20% fatty acids selected from the group consisting of C18:1, C18:2, C18:3, and mixtures thereof; and (e) not more than 4% C18:2 fatty acids. The fat is used in the production of food products, like for example chocolate.

US5275835 discloses a process for preparing reduced calorie flavored confectionery compositions, in particular chocolate flavored confectionery compositions, containing certain reduced calorie substitute fats.

US4888196 discloses a process for tempering flavored confectionery compositions, in particular chocolate-flavored confectionery compositions, containing certain reduced calorie fats, as well as the resulting tempered products.

EP0390408 discloses a process for tempering flavored confectionery compositions, in particular chocolate-flavored confectionery compositions, containing certain reduced calorie fats, as well as the resulting tempered products.

US5589216 discloses confectionery compositions which contain reduced calorie fats. The reduced calorie fats herein comprise triglycerides containing medium and long chain fatty acids. These reduced calorie fats exhibit rapid transformation into beta phase. As a result, the reduced calorie confectionery compositions require less in mould time.

When a small amount of triacylglycerol (a bloom resistance enhancer) as described above is contained in fats and oils of chocolate, the bloom resistance of the chocolate is improved. However, there is a disadvantage that the management of the tempering state becomes difficult because the temper index, which would indicate proper temper otherwise, turns to indicate under temper.

### CITATION LIST

### PATENT LITERATURE

PATENT LITERATURE 1: JP-A-2-138937
PATENT LITERATURE 2: JP-A-5-311190

### SUMMARY OF THE INVENTION

### PROBLEMS TO BE SOLVED BY THE INVENTION

Specifically, the present invention is intended to provide chocolate for which tempering is easily managed even in a case where fats and oils contain a bloom resistance enhancer and the like. In addition, the present invention is intended to provide chocolate containing a hard butter and a chocolate comprising a chocolate additive suitable for manufacturing of the above-described chocolate.

### SOLUTION TO THE PROBLEMS

The inventors of the present invention have well studied how to solve the above-described problems. As a result, it has been found that by adding a small amount of triacylglycerol (MMM) having three fatty acid (M) molecules of 6 to 10 carbons that are ester-bonded to the glycerol into the fats and oils of the chocolate, the chocolate mix (chocolate in a melted state in which crystals of the fats and oils are completely melted) is found to be proper temper. This led to the completion of the present invention.

The present invention is defined by the claims.

### EFFECTS OF THE INVENTION

According to the present invention, chocolate for which the tempering is easily managed even in a case where the fats and oils contain a bloom resistance enhancer and the like can be provided. Moreover, according to the present invention, a chocolate containing a hard butter and a chocolate comprising a chocolate additive suitable for manufacturing of the above-described chocolate can be provided.

### DESCRIPTION OF THE EMBODIMENTS

Chocolate of the present invention will be described in order as follows.

As described herein, chocolate is not limited to the chocolate defined in "Fair Competition Codes concerning Labeling on Chocolates" (Japan Chocolate Industry Fair Trade Conference) or provisions in laws and regulations and the like. That is, the main raw material of the chocolate according to the present invention is edible fats and oils and saccharides. Cacao components (cacao mass, cocoa powder, and the like), dairy products, flavors, emulsifiers, and the like are added to the main raw material as necessary. Such chocolate is manufactured through some or all of chocolate manufacturing processes (mixing process, refining process, conching process, molding process, cooling process, and the like). Also, the chocolate according to the present invention includes white chocolate and color chocolate as well as dark chocolate and milk chocolate.

The chocolate according to the present invention preferably contains 25 to 65 mass% of fats and oils. The content of fats and oils in the chocolate according to the present invention is more preferably 28 to 55 mass%, and much more preferably 30 to 45 mass%. It is noted that the fats and oils contained in the chocolate according to the present invention include fats and oils (cocoa butter, milk fat, and the like) derived from an oil-containing raw material (cacao mass, cocoa powder, whole milk powder, and the like), other than the fats and oils to be formulated. For example, in general, the content of fats and oils (cocoa butter) in cacao mass is 55 mass% (oil content: 0.55); the content of fats and oils (cocoa butter) in cocoa powder is 11 mass% (oil content: 0.11); and the content of fats and oils (milk fat) in whole milk powder is 25 mass% (oil content: 0.25). Therefore, the content of fats and oils in chocolate comes to be a sum of the values each obtained by multiplying a formulated amount (mass%) of each raw material in chocolate by the oil percentage.

The fats and oils in the chocolate of the present invention contain 0.04 mass% or greater of and less than 4 mass% of MMM. Hereinafter, M and the MMM mean as follows. The M is a fatty acid of 6 to 10 carbons. The MMM is a triacylglycerol having three M molecules with an ester-bond to a single glycerol molecule. These three fatty acids (M) of the MMM may be all the same, or may include different fatty acids. Further, the MMM may be a mixture of multiple different compounds. Examples of such a mixture can include a mixture of trioctanoyl glycerol and tridecanoyl glycerol. The fatty acid having 6 to 10 carbons, which constitutes the MMM, is preferably linear saturated fatty acid. The content of the MMM in the fats and oils of the chocolate is 0.04 to 4 mass%, preferably 0.08 to 3 mass%, and more preferably 0.12 to 2 mass%. When the content of the MMM in the fats and oils of the chocolate falls within the above-described range, the temper index of the chocolate tends to be in a proper temper range, and therefore, the tempering management is facilitated.

The fats and oils in the chocolate of the present invention contain the above-described MMM. Of the total amount of constituent fatty acids contained in the MMM, fatty acids of 6 carbons preferably account for 10 mass% or less, more preferably 5 mass% or less. Of the total amount of the constituent fatty acids contained in the above-described MMM, fatty acids of 10 carbons account for preferably 10 mass% or greater, more preferably 20 to 100 mass%, much more preferably 40 to 80 mass%.

The chocolate of the present invention is a chocolate containing 0.01 mass% or greater of and less than 4 mass% of the following MMM in fats and oils of the chocolate. Of the total amount of constituent fatty acids contained in the MMM, the constituent fatty acid accounting for 95 mass% or greater is octanoic acid (8 carbons) or decanoic acid (10 carbons). Further, a mass ratio between the octanoic acid and the decanoic acid is preferably 100:0 to 10:90, and more preferably 80:20 to 20:80.

The MMM contained in the fats and oils of the chocolate of the present invention can be manufactured using a typical known method. For example, the MMM can be manufactured by heating fatty acids of 6 to 10 carbons and glycerol to 120 to 180°C, to perform dehydration condensation. Such condensation reaction is preferably performed under reduced pressure. A catalyst can be used for the above-described condensation reaction. However, it is preferred to use no catalyst in the above-described condensation reaction.

The fats and oils in the chocolate of the present invention preferably contain 0.01 to 10 mass% of L2M and LM2 in total. Hereinafter, L, the L2M, and the LM2 mean as follows. The L is a saturated fatty acid of 16 to 24 carbons. The L2M is a triacylglycerol having the two L molecules and the single M molecule, the molecules being bonded to a single glycerol molecule. The LM2 is a triacylglycerol having the single L molecule and the two M molecules, the molecules being bonded to a single glycerol molecule. The L is preferably a saturated fatty acid of 16 to 20 carbons, and more preferably a saturated fatty acid of 16 to 18 carbons. The fats and oils in the chocolate of the present invention more preferably contain, in total, 0.05 to 5 mass% of the L2M and the LM2, much more preferably 0.1 to 3 mass%, and most preferably 0.25 to 2.5 mass%. When the total content (hereinafter also referred to as "L2M+LM2") of the L2M and the LM2 in the fats and oils of the chocolate falls within the above-described range, the bloom resistance of the chocolate is improved.

Regarding the above-described L2M and the LM2, the mass ratio (L2M/LM2) of the content of the L2M in the fats and oils of the chocolate to the content of the LM2 in the fats and oils of the chocolate is preferably 0.05 to 4.5, more preferably 0.3 to 3, and much more preferably 0.55 to 2.5. When the L2M/LM2 falls within the above-described range, a decrease in the temper index of the chocolate (transition from proper temper to under temper) is suppressed.

Of the total amount of M in constituent fatty acids of the above-described L2M and the LM2, fatty acids of 6 carbons preferably account for 10 mass% or less, more preferably 5 mass% or less. Of the total amount of the M in the constituent fatty acids of the above-described L2M and the LM2, fatty acids of 10 carbons preferably 10 mass% or greater, more preferably 20 to 100 mass%, much more preferably 40 to 100 mass%, most preferably 60 to 100 mass%.

As the L2M and the LM2 in the fats and oils of the chocolate of the present invention, may be used fats and oils containing L2M and LM2 (fats and oils containing, in total, 40 mass% or greater, preferably 60 mass% or greater, of the L2M and the LM2) which can be manufactured using a typical known method. For example, the fats and oils containing the L2M and the LM2 may be fats and oils obtained by fractionation after interesterification of a fat-and-oil mixture of 10 to 65 parts by mass (more preferably 20 to 55 parts by mass) of MMM and 35 to 90 parts by mass (more preferably 45 to 80 parts by mass) of later-described other types of fats and oils. The other types of fats and oils as described herein are fats and oils having an iodine value of 5 or less and containing, in the constituent fatty acids, 90 mass% or greater of saturated fatty acid having 16 carbons or more. Examples of such fats and oils may include fully hydrogenated oil obtained from a raw material such as rapeseed oil, soy bean oil, or palm oil. Alternatively, the fats and oils containing the L2M and the LM2 may be fats and oils obtained as follows: after a fat-and-oil mixture of MMM and fats and oils (e.g., rapeseed oil, soy bean oil, or palm oil) containing, in constituent fatty acids, 90 mass% or greater of saturated fatty acid having 16 carbons or more has been subjected to interesterification, the resultant is fully hydrogenated and fractionated.

Typical known methods are applicable as hydrogenation reaction, interesterification reaction, and fractionation. As the interesterification reaction, is applicable any method of chemical interesterification using a synthetic catalyst such as sodium methoxide and enzymatic interesterification using lipase as a catalyst. A typical known normal method such as dry fractionation (natural fractionation), emulsion fractionation (detergent fractionation), and solvent fractionation is applicable as fractionation.

The fats and oils containing the L2M and the LM2 may be prepared by mixing L2M-containing fats and oils and LM2-containing fats and oils. The L2M-containing fats and oils (fats and oils containing 40 mass% or greater, preferably 60 mass% or greater, of the L2M) or the LM2-containing fats and oils (fats and oils containing 40 mass% or greater, preferably 60 mass% or greater, of the LM2) may be prepared by interesterification of MMM and a lower alcohol ester of L followed by distillation of fatty acid ester and fractionation of the residual fats and oils.

The fats and oils in the chocolate of the present invention contain 0.01 mass% or greater of and less than 4 mass% of the MMM. As long as this condition is satisfied, any raw material of the fats and oils may be used for manufacturing of the chocolate of the present invention. Examples of a usable raw material of the fats and oils can include coconut oil, palm kernel oil, palm oil, fractionated palm oil (palm olein, palm super olein, and the like), shea butter, fractionated shea oil, sal fat, fractionated sal oil, illipe butter, soy bean oil, rapeseed oil, cottonseed oil, safflower oil, sunflower oil, rice oil, corn oil, sesame oil, olive oil, milk fat, and cocoa butter, as well as including an oil mixture and processed fats and oils thereof.

The chocolate of the present invention is chocolate suitable for a temper type. The fats and oils in the chocolate of the present invention preferably contain LOL in addition to the above-described MMM. Hereinafter, the O and the LOL mean as follows. The O is oleic acid. The LOL is a triacylglycerol having oleic acid (O) bonded to the 2-position and saturated fatty acids (L) with 16 to 24 carbons bonded to the 1- and 3-positions. The content of the LOL in the fats and oils of the chocolate is preferably 45 to 95 mass%, more preferably 50 to 90 mass%, and much more preferably 55 to 85 mass%. The saturated fatty acids of 16 to 24 carbons bonded to the 1- and 3-positions of the LOL are not necessarily the same saturated fatty acids. Of the total amount of the constituent fatty acid L contained in the LOL to be used, the saturated fatty acids of 16 to 18 carbons preferably account for 90 mass% or greater, more preferably 95 mass% or greater. When the LOL content in the fats and oils of the chocolate falls within the above-described range, tempering of the chocolate is facilitated.

For containing the above-described LOL in the fats and oils of the chocolate of the present invention, LOL-rich fats and oils (fats and oils containing 40 mass% or greater, preferably 60 mass% or greater of the LOL) maybe used as the fats and oils contained in the chocolate. Examples of the LOL-rich fats and oils (hereinafter also referred to as "LOL-containing fats and oils") may include cocoa butter, palm oil, shea butter, sal fat, allanblackia fat, mowrah fat, illipe butter, mango kernel oil, and fractionated oil thereof. Further, as already known, fats and oils obtained in the following manner may be used: after an interesterification with a mixture of palmitic acid, stearic acid, or lower alcohol ester thereof and high-oleic fats and oils such as high-oleic sunflower oil using 1,3-position selectivity lipase preparation, the reactant is distilled and fractionated as necessary.

The fats and oils in the chocolate of the present invention may contain, as one of the LOL, SOS (1,3-distearoyl-2-oleoylglycerol) containing oleic acid bonded to the 2-position and stearic acid bonded to the 1- and 3-positions. The SOS content in the LOL contained in the fats and oils of the chocolate is preferably 25 to 60 mass%, more preferably 30 to 55 mass%. For setting the SOS content in the LOL within the above-described range, SOS-containing fats and oils (fats and oils containing 40 mass% or greater of the SOS, preferably 60 mass% or greater) may be used. Fats and oils with a SOS content of 40 mass% or greater in the above-described LOL-containing fats and oils may be used as the SOS-containing fats and oils. When the SOS content in the LOL falls within the above-described range, tempering of the chocolate is facilitated.

The MMM content, the L2M content, the LM2 content, a L2O content, and a S2O content in the fats and oils of the chocolate of the present invention can be measured in accordance with, for example, gas chromatography (JAOCS, vol 70, 11, 1111-1114 (1993)). The LOL content can be calculated based on the value of LOL/L2O obtained by, for example, a measurement in accordance with J. High Resol. Chromatogr., 18, 105-107 (1995) and on the L2O content. The SOS content can be similarly calculated. Note that the above-described L2O is a triacylglycerol having two L molecules and a single O molecule, the molecules being ester-bonded to a single glycerol molecule. The above-described S2O is a triacylglycerol having two S molecules and a single O molecule, the molecules being ester-bonded to a single glycerol molecule.

The chocolate of the present invention preferably contains saccharides in addition to the fats and oils. Examples of usable saccharides can include sucrose (powder sugar), lactose, glucose, fructose, maltose, reduced saccharified starch, liquid sugar, enzymatically converted starch syrup, isomerized liquid sugar, sucrose-combined millet jelly, reducing sugar polydextrose, oligosaccharide, sorbitol, reduced lactose, trehalose, xylose, xylitose, maltitol, erythritol, mannitol, raffinose, and dextrin. The content of the saccharides in the chocolate of the present invention is preferably 20 to 60 mass%, more preferably 25 to 55 mass%, much more preferably 30 to 50 mass%.

In addition to the fats and oils and the saccharides, a raw material commonly blended in chocolate can be used for the chocolate of the present invention. Specific examples of a usable raw material can include dairy products such as whole milk powder and skim milk; cacao components such as cacao mass and cocoa powder; various types of powder such as soy flour, soy protein, processed fruit products, processed vegetable products, green tea powder, and coffee powder; gums; starches; emulsifiers; antioxidants; colorants; and flavors.

The chocolate of the present invention can be manufactured by a typical known method. For example, fats and oils, cacao components, saccharides, dairy products, and emulsifiers can be used as raw materials in manufacturing of the chocolate of the present invention. The chocolate of the present invention can be manufactured through a mixing process, a refining process, a conching process, and a cooling process. The chocolate of the present invention is preferably manufactured by tempering, after the conching process, to cool and solidify.

In the process of manufacturing the chocolate of the present invention, chocolate mix is preferably subjected to tempering. Tempering is a process of generating crystal nuclei of stable crystals in the fats and oils of the chocolate (the chocolate mix) with fat-and-oil crystals being completely melted. By such a process, the LOL in the fats and oils of the chocolate mix can be solidified as stable crystals. The tempering may include, for example, the process of decreasing the initial temperature of the chocolate melted at 40 to 50°C to about 26 to 29°C and subsequently heating the chocolate to about 28 to 31°C again. Alternatively, seeding may be performed instead of tempering. The seeding is, for example, a process of dispersing, as a seed agent, the stable crystals of the LOL, such as SOS or BOB (1,3-dibehenoyl-2-oleoylglycerol), in the chocolate mix. That is, the tempering can be substituted with addition of 0.05 to 5 mass% of the seed agent (seeding) to the fats and oils of the chocolate at a temperature at which the above-described stable crystals of the seed agent are not completely melted.

The chocolate of the present invention can be used for all chocolate use applications. For example, a block of chocolate after being cut or removed from a mold is edible as it is. Moreover, the chocolate of the present invention can be used for bread baking products such as bread, cakes, western confectionery, baked confectionery, doughnuts, and cream puffed cakes. The chocolate of the present invention can be, for bread baking products, used as coating materials, filling materials, or chocolate chips to be mixed with dough.

The present invention also provides a chocolate containing a hard butter suitable for manufacturing of the chocolate of the present invention. The hard butter contains 0.03 to 15 mass% of MMM, 0.03 to 30 mass% of L2M and LM2, and 45 to 95 mass% of LOL. The MMM content in the hard butter is preferably 0.2 to 10 mass%, and more preferably 0.4 to 6 mass%. The total content of the L2M and the LM2 in the hard butter is preferably 0.2 to 15 mass%, and more preferably 1 to 10 mass%. The LOL content in the hard butter is preferably 50 to 90 mass%, and more preferably 55 to 85 mass%. When the MMM content, the content of the L2M and the LM2, and the LOL content in the hard butter fall within the above-described ranges, tempering of the chocolate using the hard butter is facilitated while such chocolate exhibits excellent bloom resistance.

Moreover, the content of SOS in the LOL of the hard butter is preferably 30 to 90 mass%, more preferably 35 to 85 mass%, and much more preferably 40 to 80 mass%. When the SOS content in the LOL of the hard butter falls within the above-described range, tempering of the chocolate using the hard butter is further facilitated while such chocolate exhibits excellent bloom resistance.

The hard butter is, in the fats and oils of the chocolate, contained in 3 to 100 mass%, more preferably 5 to 60 mass%, much more preferably 7 to 30 mass%, and most preferably 9 to 20 mass%. Alternatively, the hard butter may be, in the fats and oils of the chocolate, used in 10 to 1000 parts by mass with respect to 100 parts by mass of cocoa butter.

The present invention also provides a chocolate comprising a chocolate additive suitable for manufacturing of the chocolate of the present invention. The chocolate additive comprised in the chocolate of the present invention comprises 2 to 70 mass% of the MMM and 20 to 98 mass% of the L2M and the LM2. The MMM content in the chocolate additive of the present invention is preferably 4 to 40 mass%, and more preferably 8 to 25 mass%. The total content of the L2M and the LM2 in the chocolate comprising the chocolate additive of the present invention is preferably 40 to 94 mass%, and more preferably 55 to 88 mass%.

The chocolate additive may be interesterified fats and oils containing fatty acids of 6 to 10 carbons accounting for 25 to 65 mass% of the total amount of the constituent fatty acids and saturated fatty acids of 16 to 18 carbons accounting for 35 to 75 mass% of the total amount of the constituent fatty acids. Of the total amount of the constituent fatty acids of the interesterified fats and oils, the fatty acids of 6 to 10 carbons preferably account for 30 to 60 mass%, and more preferably 35 to 55 mass%. Of the total amount of the constituent fatty acids, the saturated fatty acids of 16 to 18 carbons preferably account for 40 to 70 mass%, and more preferably 45 to 65 mass%. The above-described interesterified fats and oils contain a proper amount of each of the MMM, the L2M, and the LM2, and therefore, can be used as the chocolate additive without change.

The above-described interesterified fats and oils can be manufactured using a typical known method. For example, the above-described interesterified fats and oils may be fats and oils obtained by interesterification of a fat-and-oil mixture of 25 to 65 parts by mass (more preferably 30 to 60 parts by mass) of MMM and 35 to 75 parts by mass (more preferably 40 to 70 parts by mass) of fats and oils having an iodine value of 5 or less and containing, in constituent fatty acids, 90 mass% or greater of saturated fatty acid having 16 carbons or more (for example, fully hydrogenated oil obtained from a raw material such as rapeseed oil, soy bean oil, or palm oil). Alternatively, the interesterified fats and oils may be fats and oils obtained as follows: after a fat-and-oil mixture of MMM and fats and oils (e.g., rapeseed oil, soy bean oil, or palm oil) containing, in constituent fatty acids, 90 mass% or greater of saturated fatty acid having 16 carbons or more has been subjected to interesterification, the resultant is fully hydrogenated. Typical known methods are applicable as hydrogenation reaction and interesterification reaction. The interesterification reaction is applicable to any method of chemical interesterification using a synthetic catalyst such as sodium methoxide and enzymatic interesterification using lipase as a catalyst.

The chocolate additive comprised in the chocolate of the present invention is, in the fats and oils of the chocolate of the present invention, contained in 0.05 to 15 mass%, preferably 0.1 to 12.7 mass%, more preferably 0.2 to 8 mass%, and much more preferably 0.4 to 5.5 mass%. The tempering of the chocolate using the chocolate additive comprised in the chocolate of the present invention is facilitated while such chocolate exhibits excellent bloom resistance.

Regarding the above-described L2M and the LM2 in the hard butter and the chocolate additive comprised in the chocolate according to the present invention, the mass ratio (L2M/LM2) of the content of the L2M to the content of the LM2 is preferably 0.05 to 4.5, more preferably 0.3 to 3, and much more preferably 0.55 to 2.5. When the L2M/LM2 falls within the above-described range, the chocolate using the hard butter or the chocolate additive contains proper amounts of the L2M and the LM2 in the fats and oils. Thus, a decrease in the temper index of the chocolate (transition from the proper temper to the under temper) is suppressed.

Next, the present invention will be described with reference to examples. However, the present invention is not limited to these examples.

The examples wherein the ranges are not falling within the claimed ranges are not part of the present invention.

### [Analysis Method]

The MMM content, the L2M content, the LM2 content, the L2O content, and the S2O content in the fats and oils were measured in accordance with the gas chromatography (JAOCS, vol 70, 11, 1111-1114 (1993)). The LOL/L2O ratio was measured by the method in accordance with J. High Resol. Chromatogr., 18, 105-107 (1995). The LOL content was calculated based on the LOL/L2O ratio and the L2O content. The SOS content was similarly calculated.

The temper index of the chocolate was measured by a temper meter (TENPERMETER E5 manufactured by Sollich GmbH & Co.) with chocolate in a melted state (a state in which crystals of fats and oils in the chocolate are melted).

The temper index means as follows:
3.9 or less: not preferable because of under temper;
4.0 to 6.0: preferable because of proper temper
(4.6 to 5.4: more preferable in proper temper); and
6.1 or greater: not preferable because of over temper

### [Preparation of MMM]

(MMM-1): MMM was synthesized as (MMM-1), the constituent fatty acids being caprylic acid and capric acid and the mass ratio thereof being 75:25.
(MMM-2): MMM was synthesized as (MMM-2), the constituent fatty acids being caprylic acid and capric acid and the mass ratio thereof being 3:7.

### [Preparation of L2M-Containing Fats and Oils]

(L2M-1): An amount of 1 mol of tricaprylin and 6 mols of ethyl stearate were mixed together. Subsequently, an interesterified mixture was obtained by interesterification using 1,3-position specific lipase. After the fatty acid ethyl ester was distilled from the interesterified mixture, the solvent was fractionated from the distillation residue. In this manner, (L2M-1) was obtained. In the (L2M-1), the content of S8S (1,3-distearoyl-2-caprylicglycerol) as L2M is 96.8 mass%.
(L2M-2): An amount of 1 mol of tricaprylin and 6 mols of ethyl stearate were mixed together. Subsequently, an interesterified mixture was obtained by interesterification using 1,3-position specific lipase. After the fatty acid ethyl ester was distilled from the interesterified mixture, the solvent was fractionated from the distillation residue. In this manner, (L2M-2) was obtained. In the (L2M-2), the content of S10S (1,3-distearoyl-2-capricglycerol) as L2M is 94.8 mass%.

### [Preparation of Fats and Oils Containing L2M and LM2]

(L2M+LM2-1): An amount of 86 parts by mass of rapeseed oil and 14 parts by mass of the MMM-1 were mixed together. Subsequently, interesterified fats and oils were obtained by random interesterification using sodiummethylate as a catalyst. After the interesterified fats and oils were fully hydrogenated, the solvent was fractionated. In this manner, (L2M+LM2-1) was obtained. In the (L2M+LM2-1), the total content of the L2M and the LM2 is 95.4 mass%, and the mass ratio (L2M/LM2) of the L2M content to the LM2 content is 4.1.
(L2M+LM2-2): An amount of 70 parts by mass of rapeseed oil and 30 parts by mass of the MMM-2 were mixed together. Subsequently, interesterified fats and oils were obtained by random interesterification using sodiummethylate as a catalyst. After the interesterified fats and oils were fully hydrogenated, the solvent was fractionated. In this manner, the (L2M+LM2-2) was obtained. In the (L2M+LM2-2), the total content of the L2M and the LM2 is 98.1 mass%, and the mass ratio (L2M/LM2) of the L2M content to the LM2 content is 1.6.
(L2M+LM2-3): An amount of 50 parts by mass of rapeseed oil and 50 parts by mass of the MMM-2 were mixed together. Subsequently, interesterified fats and oils were obtained by random interesterification using sodiummethylate as a catalyst. After the interesterified fats and oils were fully hydrogenated, the solvent was fractionated. In this manner, (L2M+LM2-3) was obtained. In the (L2M+LM2-3), the total content of the L2M and the LM2 is 97.2 mass%, and the mass ratio (L2M/LM2) of the L2M content to the LM2 content is 0.7.

### [Preparation of Fats and Oils Containing MMM, L2M, and LM2]

(MMM+L2M+LM2-1): An amount of 50 parts by mass of fully hydrogenated oil of rapeseed oil and 50 parts by mass of the MMM-2 were mixed together. Subsequently, (MMM+L2M+LM2-1) was obtained by random interesterification using sodiummethylate as a catalyst. In the (MMM+L2M+LM2-1), the MMM content is 19.9 mass%, and the total content of the L2M and the LM2 is 74.6 mass%. Moreover, the mass ratio (L2M/LM2) of the L2M content to the LM2 content is 0.7.

### [Preparation of SOS-Containing Fats and Oils]

(SOS-1): An amount of 40 parts by mass of high-oleic sunflower oil and 60 parts by mass of ethyl stearate were mixed together. Subsequently, an interesterified mixture was obtained by interesterification using 1,3-position specific lipase. After fatty acid ethyl ester was distilled from the interesterified mixture, the solvent was fractionated from the distillation residue. In this manner, (SOS-1) was obtained. In the (SOS-1), the SOS content is 66.7 mass%.

### [First Chocolate Preparation]

According to the compositions of Table 1, chocolate of first reference example, a first comparative example, and first to third examples was prepared. That is, according to a common procedure, the chocolate in the melted state was obtained by mixing, refining, and conching. The temper index of each type of chocolate in the melted state was measured, and results thereof are shown in Table 1.

**[Table 1]**

| [Table 1] Chocolate Composition and Temper Index | | | | | |
|---|---|---|---|---|---|
| | First Reference Example | First Comparative Example | First Example | Second Example | Third Example |
| Raw Material Composition (mass%) | | | | | |
| Cacao Mass | 40.0 | 40.0 | 40.0 | 40.0 | 40.0 |
| Cocoa Butter | 12.0 | 11.3 | 11.25 | 11.2 | 10.96 |
| MMM-1 | - | - | - | - | - |
| MMM-2 | - | - | 0.05 | 0.1 | 0.34 |
| L2M+LM2-1 | - | - | - | - | - |
| L2M+LM2-2 | - | - | - | - | - |
| L2M+LM2-3 | - | 0.7 | 0.7 | 0.7 | 0.7 |
| Sugar | 47.5 | 47.5 | 47.5 | 47.5 | 47.5 |
| Emulsifier | 0.45 | 0.45 | 0.45 | 0.45 | 0.45 |
| Flavor | 0.05 | 0.05 | 0.05 | 0.05 | 0.05 |
| Total | 100 | 100 | 100 | 100 | 100 |
| Fat-and-oil Content (mass%) in Chocolate | 34.0 | 34.0 | 34.0 | 34.0 | 34.0 |
| MMM (mass%) in Fats and Oils of Chocolate | - | - | 0.15 | 0.29 | 1.0 |
| L2M+LM2 (mass%) | - | 2.0 | 2.0 | 2.0 | 2.0 |
| L2M/LM2 | - | 0.7 | 0.7 | 0.7 | 0.7 |
| LOL (mass%) | 85.3 | 83.5 | 83.4 | 83.3 | 82.7 |
| SOS (mass%) in LOL | 33.5 | 33.5 | 33.5 | 33.5 | 33.5 |
| Temper Index | 5.0 | 3.6 | 4.4 | 4.6 | 4.8 |

### [Second Chocolate Preparation]

According to compositions of Table 2, chocolate of fifth comparative examples, and a fourth example was prepared. That is, according to a common procedure, the chocolate in the melted state was obtained by mixing, refining, and conching. The temper index of each type of chocolate in the melted state was measured, and results thereof are shown in Table 2.

**[Table 2]**

| [Table 2] Chocolate Composition and Temper Index | | | | | |
|---|---|---|---|---|---|
| | Second Comparative Example | Third Comparative Example | Fourth Comparative Example | Fifth Comparative Example | Fourth Example |
| Raw Material Composition (mass%) | | | | | |
| Cacao Mass | 40.0 | 40.0 | 40.0 | 40.0 | 40.0 |
| Cocoa Butter | 11.3 | 11.3 | 11.3 | 11.3 | 11.83 |
| MMM-1 | - | - | - | - | - |
| MMM-2 | - | - | - | - | 0.17 |
| L2M-1 | 0.7 | - | - | - | - |
| L2M-2 | - | 0.7 | - | - | - |
| L2M+LM2-1 | - | - | 0.7 | - | - |
| L2M+LM2-2 | - | - | - | 0.7 | - |
| L2M+LM2-3 | - | - | - | - | - |
| Sugar | 47.5 | 47.5 | 47.5 | 47.5 | 47.5 |
| Emulsifier | 0.45 | 0.45 | 0.45 | 0.45 | 0.45 |
| Flavor | 0.05 | 0.05 | 0.05 | 0.05 | 0.05 |
| Total | 100 | 100 | 100 | 100 | 100 |
| Fat-and-oil Content (mass%) in Chocolate | 34.0 | 34.0 | 34.0 | 34.0 | 34.0 |
| MMM (mass%) in Fats and Oils of Chocolate | - | - | - | - | 0.5 |
| L2M+LM2 (mass%) | 2.0 | 2.0 | 2.0 | 2.0 | - |
| L2M/LM2 | - | - | 4.1 | 1.6 | - |
| LOL (mass%) | 83.5 | 83.5 | 83.5 | 83.5 | 84.9 |
| SOS (mass%) in LOL | 33.5 | 33.5 | 33.5 | 33.5 | 33.5 |
| Temper Index | 1.9 | 2.2 | 2.7 | 3.4 | 5.4 |

### [Third Chocolate Preparation]

According to compositions of Table 3, chocolate of fifth to ninth examples was prepared. That is, according to a common procedure, the chocolate in the melted state was obtained by mixing, refining, and conching. The temper index of each type of chocolate in the melted state was measured, and results thereof are shown in Table 3.

**[Table 3]**

| [Table 3] Chocolate Composition and Temper Index | | | | | |
|---|---|---|---|---|---|
| | Fifth Example | Sixth Example | Seventh Example | Eighth Example | Ninth Example |
| Raw Material Composition (mass%) | | | | | |
| Cacao Mass | 40.0 | 40.0 | 40.0 | 40.0 | 40.0 |
| Cocoa Butter | 5.6 | 10.3 | 6.27 | 9.9 | 11.28 |
| SOS-1 | 5.0 | - | 5.0 | - | - |
| MMM-1 | - | - | - | - | 0.02 |
| MMM-2 | 0.7 | 0.34 | 0.03 | 1.4 | - |
| L2M-1 | 0.7 | - | - | - | - |
| L2M-2 | - | - | - | - | - |
| L2M+LM2-1 | - | - | - | - | - |
| L2M+LM2-2 | - | 1.36 | - | 0.7 | - |
| L2M+LM2-3 | - | - | 0.7 | - | 0.7 |
| Sugar | 47.5 | 47.5 | 47.5 | 47.5 | 47.5 |
| Emulsifier | 0.45 | 0.45 | 0.45 | 0.45 | 0.45 |
| Flavor | 0.05 | 0.05 | 0.05 | 0.05 | 0.05 |
| Total | 100 | 100 | 100 | 100 | 100 |
| Fat-and-oil Content (mass%) in Chocolate | 34.0 | 34.0 | 34.0 | 34.0 | 34.0 |
| MMM (mass%) in Fats and Oils of Chocolate | 2.0 | 1.0 | 0.09 | 4.0 | 0.06 |
| L2M+LM2 (mass%) | 2.0 | 4.0 | 2.0 | 2.0 | 2.0 |
| L2M/LM2 | - | 1.6 | 0.7 | 1.6 | 0.7 |
| LOL (mass%) | 81.6 | 81.0 | 83.3 | 80.0 | 83.5 |
| SOS (mass%) in LOL | 40.5 | 33.5 | 40.4 | 33.5 | 33.5 |
| Temper Index | 4.1 | 4.8 | 4.6 | 4.8 | 4.2 |

The above-described first to third chocolate preparations show the followings. The temper index in the second to third comparative examples with the L2M as an anti-graining agent (a bloom resistance enhancer) described in Patent Literature 2 significantly decreases as compared to the first reference example. In the first to third examples and the fifth to ninth examples with the MMM, the L2M is contained, but the proper temper is realized. According to the first to ninth examples, the MMM allows the temper index to be stable as the proper temper.

### [Preparation of Hard Butter and Chocolate]

Hard butter A was obtained by mixing 90 parts by mass of commercially-available hard butter (product name: Vienta50C manufactured by Nisshin Oillio Group, Ltd.), 1.4 parts by mass of (MMM-2), and 8.6 parts by mass of (L2M+LM2-2). A composition of the hard butter A is shown in Table 4.

Moreover, hard butter B was obtained by mixing 83.6 parts by mass of commercially-available hard butter (product name: Vienta50C manufactured by Nisshin Oillio Group, Ltd.) and 16.4 parts by mass of (MMM+L2M+LM2-1). A composition of the hard butter B is shown in Table 4.

According to the compositions of Table 4, chocolate of tenth to eleventh examples in the melted state was, according to the common procedure, prepared by mixing, refining, and conching. The temper index of each type of chocolate in the melted state was measured, and results thereof are shown in Table 4.

**[Table 4]**

| [Table 4] Hard Butter Composition, Chocolate Composition, and Temper Index | | |
|---|---|---|
| | Tenth Example | Eleventh Example |
| Hard Butter | A | B |
| MMM (mass%) | 1.4 | 3.3 |
| L2M+LM2 (mass%) | 8.4 | 12.2 |
| L2M/LM2 | 1.6 | 0.7 |
| LOL (mass%) | 74.7 | 69.4 |
| SOS (mass%) in LOL | 38.6 | 38.6 |

| Chocolate Raw Material Composition (mass%) | | |
|---|---|---|
| Cacao Mass | 40.0 | 40.0 |
| Cocoa Butter | 7.0 | 7.0 |
| Hard Butter | 5.0 | 5.0 |
| Sugar | 47.45 | 47.45 |
| Emulsifier | 0.5 | 0.5 |
| Flavor | 0.05 | 0.05 |
| Total | 100 | 100 |
| Fat-and-oil Content (mass%) in Chocolate | 34.0 | 34.0 |
| MMM (mass%) in Fats and Oils of Chocolate | 0.2 | 0.49 |
| L2M+LM2 (mass%) | 1.2 | 1.8 |
| L2M/LM2 | 1.6 | 0.7 |
| LOL (mass%) | 83.7 | 83.0 |
| SOS (mass%) in LOL | 34.4 | 34.1 |
| Temper Index | 4.5 | 5.0 |

### [Chocolate Additive]

Triacylglycerol mixed fats and oils can be used as the chocolate additive, the triacylglycerol mixed fats and oils being obtained in such a manner that the MMM-containing fats and oils, the L2M-containing fats and oils, and the fats and oils containing the L2M and the LM2 as used in the above-described first to tenth examples are mixed in advance at each blending ratio of the first to tenth examples. A composition of each mixture in the case of using triacylglycerol of the first to tenth examples as the chocolate additive is shown in Tables 5 and 6. Note that (MMM+L2M+LM2-1) (the MMM content is 19.9 mass%, the total content of the L2M and the LM2 is 74.6 mass%, and the mass ratio (L2M/LM2) of the L2M content to the LM2 content is 0.7) blended with the hard butter in the eleventh example is itself the chocolate additive comprised in the chocolate of the present invention.

**[Table 5]**

| [Table 5] Chocolate Additive Composition | | | | | |
|---|---|---|---|---|---|
| | First Example | Second Example | Third Example | Fourth Example | Fifth Example |
| MMM (mass%) in Chocolate Additive | 6.7 | 12.5 | 32.7 | 100 | 50 |
| L2M+LM2 (mass%) | 90.7 | 85.1 | 65.4 | 0 | 48.4 |
| L2M/LM2 | 0.7 | 0.7 | 0.7 | - | - |

**[Table 6]**

| [Table 6] Chocolate Additive Composition | | | | | |
|---|---|---|---|---|---|
| | Sixth Example | Seventh Example | Eighth Example | Ninth Example | Tenth Example |
| MMM (mass%) in Chocolate Additive | 20 | 2.8 | 66.7 | 4.1 | 17.1 |
| L2M+LM2 (mass%) | 78.5 | 94.8 | 32.7 | 93.2 | 80.6 |
| L2M/LM2 | 1.6 | 0.7 | 1.6 | 0.7 | 0.7 |

## Claims

1. Chocolate comprising:
25 to 65 mass% of fats and oils, **characterized in that**
the fats and oils in the chocolate contain;
0.04 to 4 mass% of MMM, wherein
the M means a fatty acid of 6 to 10 carbons, and
the MMM means a triacylglycerol having the three M molecules bonded to a single glycerol molecule, and
45 to 95 mass% of LOL, wherein
the O means an oleic acid,
the L means a saturated fatty acid of 16 to 24 carbons, and
the LOL means a triacylglycerol having the Ls bonded to 1- and 3-positions of a single glycerol molecule and O bonded to a 2-position of the single glycerol molecule.

2. The chocolate according to claim 1, wherein
a total content of L2M and LM2 in the fats and oils is 0.01 to 10 mass%,
the L means a saturated fatty acid of 16 to 24 carbons,
the L2M means a triacylglycerol having the two L molecules and the single M molecule, the molecules being bonded to a single glycerol molecule, and
the LM2 means a triacylglycerol having the single L molecule and the two M molecules, the molecules being bonded to a single glycerol molecule.

3. The chocolate according to claim 2, wherein
a mass ratio (L2M/LM2) of a content of the L2M in the fats and oils to a content of the LM2 in the fats and oils is 0.05 to 4.5.

4. The chocolate according to any one of claims 1 to 3, wherein
a content of SOS in the LOL is 25 to 60 mass%,
the S means a stearic acid, and
the SOS means a 1,3-distearoyl-2-oleoylglycerol.

5. The chocolate according to any one of claims 1 to 4, wherein the chocolate further containing , in fats and oils, 3 to 100 mass% of hard butter comprising:
0.03 to 15 mass% of MMM;
0.03 to 30 mass% of L2M and LM2; and
45 to 95 mass% of LOL, wherein
the L means a saturated fatty acid of 16 to 24 carbons,
the M means a fatty acid of 6 to 10 carbons,
the O means an oleic acid,
the MMM means a triacylglycerol having the three M molecules bonded to a single glycerol molecule,
the L2M means a triacylglycerol having the two L molecules and the single M molecule, the molecules being bonded to a single glycerol molecule,
the LM2 means a triacylglycerol having the single L molecule and the two M molecules, the molecules being bonded to a single glycerol molecule, and
the LOL means a triacylglycerol having the Ls bonded to 1- and 3-positions of a single glycerol molecule and the O bonded to a 2-position of the single glycerol molecule.

6. The chocolate according to claim 5, wherein
a mass ratio (L2M/LM2) of a content of the L2M in the hard butter to a content of the LM2 in the hard butter is 0.05 to 4.5.

7. The chocolate according to claim 5 or 6, wherein
a content of SOS in the LOL is 30 to 90 mass%,
the S means a stearic acid, and
the SOS means a 1,3-distearoyl-2-oleoylglycerol.

8. The chocolate according to any one of claims 1 to 7, further containing in fats and oils, 0.05 to 15 mass% of a chocolate additive comprising:
2 to 70 mass% of MMM; and
20 to 98 mass% of L2M and LM2, wherein
the L means a saturated fatty acid of 16 to 24 carbons,
the M means a fatty acid of 6 to 10 carbons,
the MMM means a triacylglycerol having the three M molecules bonded to a single glycerol molecule,
the L2M means a triacylglycerol having the two L molecules and the single M molecule, the molecules being bonded to a single glycerol molecule, and
the LM2 means a triacylglycerol having the single L molecule and the two M molecules, the molecules being bonded to a single glycerol molecule.

9. The chocolate according to claim 8, wherein
a mass ratio (L2M/LM2) of a content of the L2M in the chocolate additive to a content of the LM2 in the chocolate additive is 0.05 to 4.5.

10. The chocolate according to claim 8 or 9, wherein
interesterified fats and oils contain constituent fatty acids; and of a total amount of the constituent fatty acids, constituent fatty acids of 6 to 10 carbons account for 25 to 65 mass%, and saturated constituent fatty acids of 16 to 18 carbons account for 35 to 75 mass%.

## Patentansprüche

1. Schokolade, umfassend:
25 bis 65 Massen-% Fette und Öle, **dadurch gekennzeichnet, dass** die Fette und Öle in der Schokolade enthalten;
0,04 bis 4 Massen-% MMM, wobei
das M eine Fettsäure mit 6 bis 10 Kohlenstoffatomen bezeichnet und
das MMM ein Triacylglycerin mit den drei M-Molekülen bezeichnet, die an ein einzelnes Glycerinmolekül gebunden sind, und
45 bis 95 Massen-% LOL, wobei
das O eine Ölsäure bezeichnet,
das L eine gesättigte Fettsäure mit 16 bis 24 Kohlenstoffatomen bezeichnet und
das LOL ein Triacylglycerin bezeichnet, dessen Ls an die 1-und 3-Position eines einzelnen Glycerinmoleküls gebunden sind, und dessen O an eine 2-Position des einzelnen Glycerinmoleküls gebunden ist.

2. Schokolade nach Anspruch 1, wobei
ein Gesamtgehalt an L2M und LM2 in den Fetten und Ölen 0,01 bis 10 Massen-% beträgt,
das L eine gesättigte Fettsäure mit 16 bis 24 Kohlenstoffatomen bezeichnet,
das L2M ein Triacylglycerin mit den zwei L-Molekülen und dem einzelnen M-Molekül bezeichnet, wobei die Moleküle an ein einzelnes Glycerinmolekül gebunden sind, und
das LM2 ein Triacylglycerin mit dem einzelnen L-Molekül und den zwei M-Molekülen bezeichnet, wobei die Moleküle an ein einzelnes Glycerinmolekül gebunden sind.

3. Schokolade nach Anspruch 2, wobei
ein Massenverhältnis (L2M/LM2) eines Gehalts des L2M in den Fetten und Ölen zu einem Gehalt des LM2 in den Fetten und Ölen 0,05 bis 4,5 beträgt.

4. Schokolade nach einem der Ansprüche 1 bis 3, wobei
ein Gehalt an SOS in dem LOL 25 bis 60 Massen-% beträgt,
das S eine Stearinsäure bezeichnet, und
das SOS ein 1,3-Distearoyl-2-Oleoylglycerin bezeichnet.

5. Schokolade nach einem der Ansprüche 1 bis 4, wobei die Schokolade ferner in Fetten und Ölen 3 bis 100 Massen-% harte Butter enthält, umfassend:
0,03 bis 15 Massen-% MMM;
0,03 bis 30 Massen-% L2M und LM2; und
45 bis 95 Massen-% LOL, wobei
das L eine gesättigte Fettsäure mit 16 bis 24 Kohlenstoffatomen bezeichnet,
das M eine Fettsäure mit 6 bis 10 Kohlenstoffatomen bezeichnet,
das O eine Ölsäure bezeichnet,
das MMM ein Triacylglycerin mit den drei M-Molekülen bezeichnet, die an ein einzelnes Glycerinmolekül gebunden sind,
das L2M ein Triacylglycerin mit den zwei L-Molekülen und dem einzelnen M-Molekül bezeichnet, wobei die Moleküle an ein einzelnes Glycerinmolekül gebunden sind,
das LM2 ein Triacylglycerin mit dem einzelnen L-Molekül und den zwei M-Molekülen bezeichnet, wobei die Moleküle an ein einzelnes Glycerinmolekül gebunden sind, und
das LOL ein Triacylglycerin bezeichnet, dessen Ls an die 1-und 3-Position eines einzelnen Glycerinmoleküls gebunden sind und dessen O an eine 2-Position des einzelnen Glycerinmoleküls gebunden ist.

6. Schokolade nach Anspruch 5, wobei
ein Massenverhältnis (L2M/LM2) eines Gehalts des L2M in der harten Butter zu einem Gehalt des LM2 in der harten Butter 0,05 bis 4,5 beträgt.

7. Schokolade nach Anspruch 5 oder 6, wobei
ein Gehalt an SOS in dem LOL 30 bis 90 Massen-% beträgt,
das S eine Stearinsäure bezeichnet, und
das SOS ein 1,3-Distearoyl-2-Oleoylglycerin bezeichnet.

8. Schokolade nach einem der Ansprüche 1 bis 7, die in Fetten und Ölen ferner 0,05 bis 15 Massen-% eines Schokoladenadditivs enthält, umfassend:
2 bis 70 Massen-% MMM; und
20 bis 98 Massen-% L2M und LM2; wobei
das L eine gesättigte Fettsäure mit 16 bis 24 Kohlenstoffatomen bezeichnet,
das M eine Fettsäure mit 6 bis 10 Kohlenstoffatomen bezeichnet,
das MMM ein Triacylglycerin mit den drei M-Molekülen bezeichnet, die an ein einzelnes Glycerinmolekül gebunden sind,
das L2M ein Triacylglycerin mit den zwei L-Molekülen und dem einzelnen M-Molekül bezeichnet, wobei die Moleküle an ein einzelnes Glycerinmolekül gebunden sind, und
das LM2 ein Triacylglycerin mit dem einzelnen L-Molekül und den zwei M-Molekülen bezeichnet, wobei die Moleküle an ein einzelnes Glycerinmolekül gebunden sind.

9. Schokolade nach Anspruch 8, wobei
ein Massenverhältnis (L2M/LM2) eines Gehalts des L2M in dem Schokoladenadditiv zu einem Gehalt des LM2 im Schokoladenadditiv 0,05 bis 4,5 beträgt.

10. Schokolade nach Anspruch 8 oder 9, wobei
umgeesterte Fette und Öle Fettsäurebestandteile enthalten; und von einer Gesamtmenge der Fettsäurebestandteile Fettsäurebestandteile mit 6 bis 10 Kohlenstoffatomen 25 bis 65 Massen-% und gesättigte Fettsäurebestandteile mit 16 bis 18 Kohlenstoffatomen 35 bis 75 Massen-% ausmachen.

## Revendications

1. Chocolat comprenant :
25 à 65 % en masse de graisses et d'huiles, **caractérisé en ce que** les graisses et les huiles contenues dans le chocolat contiennent ;
0,04 à 4 % en masse de MMM,
M représentant un acide gras de 6 à 10 atomes de carbone et
MMM désignant un triacylglycérol dont les trois molécules M sont liées à une molécule de glycérol unique et
45 à 95 % en masse de LOL,
O représentant un acide oléique,
L représentant un acide gras saturé comptant 16 à 24 atomes de carbone et
LOL désignant un triacylglycérol dont les L sont liés aux positions 1 et 3 d'une molécule de glycérol unique et dont le O est lié à la position 2 de la molécule de glycérol unique.

2. Chocolat selon la revendication 1, dans lequel
la teneur totale en L2M et LM2 parmi les graisses et les huiles est de 0,01 à 10 % en masse,
L représente un acide gras saturé comptant 16 à 24 atomes de carbone,
L2M désigne un triacylglycérol comportant les deux molécules L et la molécule M unique, les molécules étant liées à une molécule de glycérol unique, et
LM2 désigne un triacylglycérol comportant la molécule L unique et les deux molécules M, les molécules étant liées à une molécule de glycérol unique.

3. Chocolat selon la revendication 2, dans lequel
le rapport en masse (L2M/LM2) d'une teneur en L2M parmi les graisses et les huiles sur une teneur en LM2 parmi les graisses et les huiles est de 0,05 à 4,5.

4. Chocolat selon l'une quelconque des revendications 1 à 3, dans lequel
la teneur en SOS dans le LOL est de 25 à 60 % en masse,
S représente un acide stéarique et
SOS représente un 1,3-distéaroyl-2-oléoylglycérol.

5. Chocolat selon l'une quelconque des revendications 1 à 4, le chocolat contenant en outre, parmi les graisses et les huiles, 3 à 100 % en masse de beurre dur comprenant :
0,03 à 15 % en masse de MMM ;
0,03 à 30 % en masse de L2M et de LM2 ; et
45 à 95 % en masse de LOL,
L représentant un acide gras saturé comptant 16 à 24 atomes de carbone,
M représentant un acide gras comptant 6 à 10 atomes de carbone,
O représentant un acide oléique,
MMM désignant un triacylglycérol dont les trois molécules M sont liées à une molécule de glycérol unique,
L2M désignant un triacylglycérol comportant les deux molécules L et la molécule M unique, les molécules étant liées à une molécule de glycérol unique,
LM2 désignant un triacylglycérol comportant la molécule L unique et les deux molécules M, les molécules étant liées à une molécule de glycérol unique, et
LOL désignant un triacylglycérol dont les L sont liés aux positions 1 et 3 d'une molécule de glycérol unique et dont le O est lié à la position 2 de la molécule de glycérol unique.

6. Chocolat selon la revendication 5, dans lequel
le rapport en masse (L2M/LM2) d'une teneur en L2M dans le beurre dur sur une teneur en LM2 dans le beurre dur est de 0,05 à 4,5.

7. Chocolat selon la revendication 5 ou 6, dans lequel
la teneur en SOS dans le LOL est de 30 à 90 % en masse,
S représente un acide stéarique et
SOS représente un 1,3-distéaroyl-2-oléoylglycérol.

8. Chocolat selon l'une quelconque des revendications 1 à 7, contenant en outre dans des matières grasses et des huiles, 0,05 à 15 % en masse d'un adjuvant du chocolat comprenant :
2 à 70 % en masse de MMM ; et
20 à 98 % en masse de L2M et de LM2,
L représentant un acide gras saturé comptant 16 à 24 atomes de carbone,
M représentant un acide gras comptant 6 à 10 atomes de carbone,
MMM désignant un triacylglycérol dont les trois molécules M sont liées à une molécule de glycérol unique,
L2M désignant un triacylglycérol comportant les deux molécules L et la molécule M unique, les molécules étant liées à une molécule de glycérol unique, et
LM2 désignant un triacylglycérol comportant la molécule L unique et les deux molécules M, les molécules étant liées à une molécule de glycérol unique.

9. Chocolat selon la revendication 8, dans lequel
le rapport en masse (L2M/LM2) d'une teneur en L2M de l'adjuvant du chocolat sur une teneur en LM2 dans l'adjuvant du chocolat est de 0,05 à 4,5.

10. Chocolat selon la revendication 8 ou 9, dans lequel
les graisses et huiles interestérifiées contiennent des acides gras constitutifs ; et dans une quantité totale des acides gras constitutifs, les acides gras constitutifs comptant 6 à 10 atomes de carbone représentent 25 à 65 % en masse et les acides gras constituants saturés comptant 16 à 18 atomes de carbone représentent 35 à 75 % en masse.
